# EUROPÄISCHE PATENTANMELDUNG

(11) **EP 4 723 413 A1**
(43) Veröffentlichungstag der Anmeldung: **08.04.2026**
(21) Anmeldenummer: 25202647.1
(22) Anmeldetag: 17.09.2025
(51) Int. Cl.: H02J 1/082, H02J 1/102, H02J 7/50

(54) **VERFAHREN ZUM BETREIBEN EINES UNTERSEEBOOTES MIT KURZFRISTIG MAXIMALER LEISTUNGSFÄHIGKEIT EINER TEILENTLADENDEN BATTERIE IN DEM UNTERSEEBOOT**

(30) Priorität: 24.09.2024 DE 102024127488
(71) Anmelder: TKMS GmbH, 24143 Kiel (DE); thyssenkrupp AG, 45143 Essen (DE)
(72) Erfinder: Lundius, Niclas, 23569 Lübeck (DE)
(74) Vertreter: thyssenkrupp Intellectual Property GmbH

(57) **Zusammenfassung**

Die vorliegende Erfindung betrifft ein Verfahren zum Betreiben eines Unterseebootes 20 mit einer Energiespeichervorrichtung, einem Bordnetz 12 und wenigstens einem Verbraucher, wobei die Energiespeichervorrichtung wenigstens zwei Stränge 1, 3, 5, 7, 9 aufweist, wobei jeder Strang 1, 3, 5, 7, 9 ein Strang-Batteriemanagementsystem 16 aufweist, wobei jeder Strang 1, 3, 5, 7, 9 über einen Gleichspannungswandler 14 trennbar mit dem Bordnetz 12 verbunden ist, wobei das Strang-Batteriemanagementsystem 16 zur Ansteuerung des Gleichspannungswandlers 14 ausgebildet und mit diesem verbunden ist, wobei jeder Strang einen Strang-Ladezustand aufweist, wobei für jeden Strang 1, 3, 5, 7, 9 eine Maximallast vorgegeben wird, dadurch gekennzeichnet, dass für jeden Strang 1, 3, 5, 7, 9 eine gesteigerte Maximallast zusammen mit einer Lasterhöhungszeit vorgegeben wird, wobei wenigstens ein Strang 1, 3, 5, 7, 9 von Bordnetz 12 getrennt ist, wobei zur Erreichung der erhöhten Leistungsabgabe das Strang-Batteriemanagementsystem 16 den Gleichspannungswandler 14 zur Abgabe der gesteigerten Maximallast für maximal die Lasterhöhungszeit ansteuert.

## Beschreibung

Die Erfindung betrifft ein Verfahren, um auch bei einer aus Strängen aufgebauten Batterie in einem Unterseeboot die volle Leistungsfähigkeit zu erreichen, auch wenn einige Stränge bereits entladen sind.

Akkumulatoren auf Lithium-Basis sind zunehmend interessant, beispielsweise aufgrund der hohen Energiedichte. Gerade für große Energiespeicher gibt es jedoch zwei grundlegende Unterschiede beispielsweise zum Blei-Schwefelsäure-Akkumulator. Zum einen können die einzelnen Zellen nicht einfach beliebig vergrößert werden. Dieses führt dazu, dass regelmäßig eine Vielzahl von Akkumulatoren zu einem größeren Modul zusammengestellt wird. Zum anderen ist gerade bei diesen Akkumulatoren das Problem des thermischen Durchgehens gegeben. Da hierbei auch eine große Menge an Gas entsteht, bedeutet dieses ein großes Risiko, insbesondere in kritischen Umgebungen, wie sich beispielsweise an Akkumulatoren in Luftfahrzeugen gezeigt hat.

Um die Akkumulatoren zu schützen, werden Batteriemanagementsysteme eingesetzt. Ein Batteriemanagementsystem verhindert insbesondere eine Tiefentladung, welche zu einer Beschädigung der Akkumulatoren führen könnte, sowie eine zu starke Leistungsabfuhr, welche zu einem Überhitzten und damit zum thermischen Durchgehen führen könnte. Somit sichert ein Batteriemanagementsystem die Akkumulatoren und sorgt für eine lange Lebensdauer. Gleichzeitig wird auch die Umgebung damit geschützt, damit somit ein Brand regelmäßig vermieden werden kann.

Es kann jedoch Gefahrensituationen geben, in denen es wichtiger sein kann, die noch zur Verfügung stehenden Energiereserven zu nutzen und dafür eine Beschädigung der Akkumulatoren billigend in Kauf zu nehmen. Ein Beispiel hierfür ist ein Unterseeboot, welches getaucht ist. In diesem Fall ist es zweckdienlich, die noch zur Verfügung stehen Energiereserven zu nutzen, um das Unterseeboot auftauchen zu lassen, um die Mannschaft evakuieren zu können.

Aus der DE 10 2017 009 527 A1 ist ein Gleichspannungswandler für Lithium-Akkumulatoren bekannt.

Aus der DE 10 2004 045 897 A1 ist eine Batterieanlage eines Unterseebootes mit zumindest zwei Batteriemodulen bekannt, welche jeweils die Bordnetzspannung des Unterseebootes haben und jeweils über einen Schalter mit dem Bordnetz des Unterseebootes verbunden sind, welcher es ermöglicht, das zugehörige Batteriemodul dem Bordnetz zu- und abzuschalten.

Aus der DE 101 06 521 C1 ist ein Torpedo mit einer Batterie zur Stromversorgung bekannt.

Aus der DE 10 2017 009 527 A1 ist ein Fahrnetz eines Unterseebootes zur Versorgung einer Fahranlage mit elektrischer Energie bekannt, wobei der Fahranlage zur Übertragung der elektrischen Energie mindestens zwei Gleichspannungswandler zugeordnet sind.

Aus der DE 10 2019 217 796 A1 ist eine Überbrückung eines Batteriemanagementsystems in einem Unterseeboot im Gefahrenfall bekannt
Aus der DE 10 2021 210 447 A1 ist ein Verfahren zum Betreiben eines Bordnetzes eines Unterseebootes bei hohen Lasten bekannt.

Aus der DE 10 2020 203 469 A1 ist ein Verfahren zum Betreiben eines Lithium-Akkumulators an einem auf Bleiakkumulatoren ausgelegtem Bordnetz in einem Unterseeboot bekannt.

Aus der DE 10 2018 213 180 A1 ist ein Verfahren zur Regelung des Netzes eines Unterwasserfahrzeugs und ein Unterwasserfahrzeug, welches zu einer derartigen Regelung ausgebildet ist, bekannt.

Auch im Regelbetrieb werden die unterschiedlichen Stränge unterschiedlich stark beansprucht. Üblicherweise fährt ein Unterseeboot getaucht nur in einem niedrigen Teillastbereich bei sehr geringer Geschwindigkeit, sodass im Regelfall immer nur eine kleine Anzahl an Strängen mit dem Bordnetz verbunden sind. Somit werden die Stränge unterschiedlich stark entladen, was wiederum zu unterschiedlichen Ladezuständen führt, wobei auch einige Stränge wegen Entladung vollständig vom Netz getrennt werden zur Vermeidung einer Tiefstentladung. Wird aber in einem solchem Zustand die volle Last benötigt, beispielsweise um den Antrieb maximal zu nutzen, so steht nicht mehr ausreichend elektrische Leistung zur Verfügung.

Aufgabe der Erfindung ist es, möglichst unabhängig vom Ladezustand der Stränge die maximale Leistung wenigstens kurzfristig zur Verfügung stellen zu können.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient dem Betreiben eines Unterseebootes mit einer Energiespeichervorrichtung, einem Bordnetz und wenigstens einem Verbraucher. Das Bordnetz kann hierbei auch beispielsweise aus zwei Teilbordnetzen bestehen. Ebenso kann das Unterseeboot bevorzugt zwei Energiespeichervorrichtungen aufweisen. Beides dient der Erhöhung der Sicherheit durch Redundanz. Bevorzugt basiert die Energiespeichervorrichtung auf einer Lithium-Technologie oder einer vergleichbaren Batterietechnologie. Bisher wurden insbesondere Blei-Akkumulatoren eingesetzt. Diese haben den Vorteil, dass die Elementarzelle sehr groß ausgebildet sein kann, also einen hohen Strom zur Verfügung stellen kann. Jedoch sind dazu üblicherweise alle Bleiakkumulatoren in Serie geschaltet, um eine ausreichend hohe Spannung zu erreichen. Daher sind Blei-Akkumulatoren für das erfindungsgemäßen Verfahren wenig geeignet. Die Energiespeichervorrichtung weist wenigstens zwei Stränge auf. Üblich sind eher 10 bis 40 Stränge. Stränge können hierbei aus 1 bis 8 Modulen aufgebaut sein, die in Reihe geschaltet sind. Innerhalb der Module sind üblicherweise die Elementarzellen sowohl parallel als auch in Reihe geschaltet, um sowohl Spannung als auch Strom zu erhöhen. Jeder Strang weist ein Strang-Batteriemanagementsystem auf. Batteriemanagementsysteme sind dem Fachmann geläufig und dienen der Überwachung und Regelung von Akkumulatoren. Jeder Strang ist über einen Gleichspannungswandler trennbar mit dem Bordnetz verbunden. Trennbar bedeutet, dass eine galvanische Trennung ebenso wie eine galvanische Verbindung möglich ist. Ein Beispiel für einen solchen Gleichspannungswandler ist zum Beispiel in der DE 10 2017 009 527 A1 in Figur 4 und der dazu gehörenden Beschreibung gezeigt. Der im Beispiel gezeigte Gleichspannungswandler weist zwei H-Brücken mit jeweils vier MOSFETS auf. Zur Trennung werden bevorzugt alle acht MOSFETS nichtleitend. Im Betrieb, also im elektrisch leitenden Zustand des Lastschalters werden immer jeweils zwei diagonal gegenüberliegende MOSFETS leitend und die anderen beiden diagonal gegenüberliegenden nichtleitend, wobei diese Schaltung ständig gewechselt wird. Diese kontinuierliche Schaltung sorgt für die Umwandlung des Gleichstroms in Wechselstrom, der dann transformiert und auf der anderen Seite analog wieder in Gleichstrom gewandelt wird. Die symmetrische Ausführung erlaubt dabei einen Stromfluss in beide Richtungen, um sowohl ein Laden als auch ein Entladen des ersten Akkumulators zu ermöglichen. Das Strang-Batteriemanagementsystem ist zur Ansteuerung des Gleichspannungswandlers ausgebildet und mit diesem verbunden. Jeder Strang weist einen Strang-Ladezustand auf. Durch die Verwendung jeweils unabhängig voneinander mit dem Bordnetz verbindbarer und trennbarer Stränge werden gerade im Niedriglastbereich nur einzeln Stränge mit dem Bordnetz verbunden, wodurch die Entladung der Stränge unterschiedlich erfolgt. Für jeden Strang wird eine Maximallast vorgegeben, wobei die Maximallast die maximale Abgabeleistung ist, also die Leistung, die laut Vorgabe maximal an das Bordnetz abgegeben werden kann. Somit ist die Maximallast eines Strangs diejenige Last, mit der der Strang dauerhaft höchstens belastet werden kann, ohne Funktionseinschränkungen oder Beschädigungen zu erleiden. Dabei umfasst der Begriff Maximallast auch die maximale Abgabeleistung, also das Produkt aus Spannung und Strom, die der Strang (im Rahmen der verfügbaren Kapazität des Strangs) dauerhaft abgeben kann. Da die Stränge üblicherweise baugleich sind, ist auch die Maximallast für alle Stränge üblicherweise gleich.

Erfindungsgemäß wird für jeden Strang eine gesteigerte Maximallast zusammen mit einer Lasterhöhungszeit vorgegeben. Die gesteigerte Maximallast ist dabei größer als die Maximallast, dafür aber zeitlich begrenzt auf die Dauer der Lasterhöhungszeit. Durch diese zeitliche Begrenzung führt dann eben auch die gesteigerte Maximallast eben nicht zu einer dauerhaften Beschädigung. Insbesondere ist wenigstens ein Strang vom Bordnetz getrennt, wodurch eben nicht mehr die planungstechnisch volle Versorgungsleistung zur Verfügung steht, also die Summe der Maximallast aller Stränge. Dieses kann aus unterschiedlichen Gründen der Fall sein. Der häufigste Fall wird sein, dass der Strang bereits zu weit entladen ist. Aber auch ein technischer Defekt, im schlimmsten Fall ein thermal runaway können dazu führen, dass ein Strang dauerhaft von Bordnetz getrennt wird. Damit steht aber nicht mehr die maximale Anzahl an Strängen zur Verfügung, sodass die Energiespeichervorrichtung insgesamt nicht mehr die maximale Versorgungsleistung zur Verfügung stellen kann, die verfügbar wäre, wenn alle Stränge mit dem Bordnetz verbunden wären. Zur Erreichung der erhöhten Leistungsabgabe mit dem oder den verfügbaren Strängen steuert das Strang-Batteriemanagementsystem den Gleichspannungswandler dieser Stränge zur Abgabe der gesteigerten Maximallast für maximal die Lasterhöhungszeit an. Dadurch kann beispielsweise die maximale Leistung für den Antrieb (als Verbraucher) zur Verfügung gestellt werden, um beispielsweise aus einer kritischen Situation zu entfliehen und so die Sicherheit der Besatzung zu gewährleisten. Hierbei ist die zeitliche Begrenzung eine kritische Komponente. Gerade durch die über die Maximallast gehende Beanspruchung steigt naturgemäß die Wärmeentwicklung. Dieses kann kurzzeitig hingenommen werden, jedoch nur zeitlich klar begrenzt. Hierbei stehen Höhe der Lasterhöhung und die Zeitdauer im direkten Verhältnis, je höher die Lasterhöhung ausfällt, um so kürzer muss diese sein. Auch ist dieses vorab für die konkrete Kombination aus Strang und Gleichspannungswandler ermitteln. Insbesondere kann hier auch die Wärmeentwicklung im Gleichspannungswandler kritischer sein als die höhere Belastung der eigentlichen Akkumulatoren im Strang.

In einer weiteren Ausführungsform der Erfindung weist das Bordnetz eine Bordnetzmaximallast auf. Die Bordnetzmaximallast ist die höchste Last, auf die das Bordnetz ausgelegt ist. Insbesondere kann die Bordnetzmaximallast die Summe der Maximallast aller Stränge sein. Ist zusätzlich beispielsweise noch ein außenluftunabhängiger Energieerzeuger, beispielsweise eine Brennstoffzellenvorrichtung vorhanden, so kann die Bordnetzmaximallast die Summe der Maximallast aller Stränge zuzüglich der Maximallast des Energieerzeugers sein. Würde diese überschritten, wäre eine Beschädigung des Bordnetzes oder seiner Komponenten möglich. Die Summe der vorgegebenen gesteigerten Maximallast an die mit dem Bordnetz verbundenen Stränge ist kleinergleich der Bordnetzmaximallast. Es kann auch vorgesehen sein, dass nur einem Teil der mit dem Bordnetz verbundenen Stränge eine gesteigerte Maximallast vorgegeben wird. In diesem Fall wäre die Summe der vorgegebenen gesteigerten Maximallast und der Abgabeleistung der anderen Stränge zusammen kleinergleich der Bordnetzmaximallast. Diese Begrenzung der Vorgabe der Leistungen verhindert, dass das Bordnetz überlastet wird und verhindert damit eine Beschädigung oder das Ansprechen von Schutzeinrichtungen im Bordnetz.

In einer weiteren Ausführungsform der Erfindung ist die Lasterhöhungszeit so gewählt ist, dass in der Lasterhöhungszeit weitere getrennte Stränge (1, 3, 5, 7, 9) mit dem Bordnetz verbunden werden können. Die Lasterhöhungszeit ist also größergleich der Aktivierungszeit des oder der getrennten Stränge. Insbesondere kann vorgesehen sein, dass die Vorgabe der erhöhten Maximallast endet, wenn die getrennten Stränge mit dem Bordnetz verbunden sind und eine Leistung durch diese Stränge abgegeben wird. Diese Beendigung kann auch vor Ablauf der Lasterhöhungszeit vorgesehen sein, insbesondere, wenn dadurch die vorstehende Bordnetzmaximallast erreicht wird. Durch diese Vorgaben kann erreicht werden, dass bei einem sprunghaften Anstieg des Leistungsbedarfs oder einem plötzlichen Abfall der Spannung im Bordnetz zusätzliche Leistung ins Bordnetz gespeist wird, um den Bedarf zumindest teilweise auszugleichen. Gleichzeitig werden vom Bordnetz getrennte zusätzliche Stränge mit dem Netz verbunden und somit die Leistungsbilanz langfristig im Bordnetz ausgeglichen. Der getrennte Zustand eines Stranges kann also bedeuten, dass der Gleichspannungswandler, über den die Batterie mit dem Bordnetz verbunden ist, zumindest teilweise abgeschaltet ist. Der getrennte Zustand kann auch bedeuten, dass ein Schalter zwischen dem Strang und dem Bordnetz geöffnet ist. Nicht gemeint ist mit dem getrennten Zustand ein Zustand, der jederzeit eine sofortige Einspeisung von Leistung aus dem Strang ins Netz ermöglicht, wie es zum Beispiel unter dem Begriff "hot standby" bekannt ist. Im Ergebnis kann das Bordnetz einerseits dynamisch auf Lastsprünge reagieren, andererseits können Stränge vom Bordnetz getrennt werden und somit Energieverbrauch durch den Stand-by-Betrieb gespart werden.

In einer weiteren Ausführungsform der Erfindung wird eine Ruhezeit vorgegeben. Nach der Steigerung der Leistungsabgabe kann während der Ruhezeit das erfindungsgemäße Verfahren zur Steigerung der Lasterhöhung nicht erneut durchgeführt werden. Dieses stellt sicher, dass die Komponenten zunächst abkühlen können, da ansonsten eine dauerhafte Beschädigung zu befürchten ist. Beispielweise kann die Ruhezeit das Dreifache der Lasterhöhungszeit betragen.

In einer weiteren Ausführungsform der Erfindung wird ein Mindestladezustand vorgegeben. Der wenigstens eine vom Bordnetz getrennte Strang weist einen Strang-Ladezustand von höchstens dem Mindestladezustand auf. Dadurch wird zuverlässig eine Tiefstentladung, die zu einer Beschädigung führen würde, vermieden. Erreicht also ein Strang den Mindestladezustand oder unterschreitet diesen, so wird dieser Strang vom Bordnetz getrennt. Dadurch steht dieser Strang eben nicht mehr zur Leistungsabgabe zur Verfügung, dem Bordnetz kann daher innerhalb der normalen Spezifikationen und ohne das erfindungsgemäße Verfahren eben nicht mehr die volle Leistung zur Verfügung gestellt werden. Gleichzeitig stellt das Verfahren aber sicher, dass der Strang vom Netz getrennt bleibt und damit nicht tiefentladen wird und damit nicht beschädigt wird.

In einer weiteren Ausführungsform der Erfindung wird ein Bereitschaftsladezustand vorgegeben. Der mit dem Bordnetz verbundene Strang, dem eine erhöhte Maximallast vorgegeben wird, muss einen Ladezustand aufweisen der größergleich dem Bereitschaftsladezustand ist. Dadurch wird sichergestellt, dass der Strang in der Lage ist die erhöhte Maximallast insbesondere für die Zeitdauer abzugeben. Weisen nur einige Stränge einen Ladezustand auf der größergleich dem Bereitschaftsladezustand ist, werden nur diese Stränge mit der erhöhten Maximallast angesteuert.

In einer Weiterbildung dieser Ausführungsform kann vorgesehen sein, dass sich der Wert für den Bereitschaftsladezustand in Abhängigkeit des Ladezustände aller mit dem Bordnetz verbundenen Stränge zeitlich ändert oder auch in Abhängigkeit der vom Bordnetz benötigten Last ändert oder auch gestaffelt vorgegeben wird. Es kann also beispielsweise vorgesehen sein, dass der Bereitschaftsladezustand so gewählt wird, dass zunächst nur den Strängen eine erhöhte Maximallast vorgegeben wird, die die höchsten Ladezustände haben, wenn die Lastanforderung nur wenig über die verfügbare Leistung aller Stränge hinausgeht. Andererseits kann der Bereitschaftsladezustand auch so gewählt werden, dass allen Strängen eine erhöhte Maximallast vorgegeben wird, wenn die Lastanforderung maximal ist. Die Lastanforderung kann sich dabei aus den im Bordnetz gemessenen Größen, wie zum Beispiel der Spannung, ergeben oder sich aus der Steuerung des Unterseeboots abgeleitet werden.

In einer weiteren Ausführungsform der Erfindung wird für jeden Strang eine weitere gesteigerte Maximallast zusammen mit einer weiteren Lasterhöhungszeit vorgegeben. Beispielsweise kann als gesteigerte Maximallast 110 % und als Lasterhöhungszeit 10 min vorgegeben werden und als weitere gesteigerte Maximallast 120 % und als Lasterhöhungszeit 2 min vorgegeben werden. Somit kann situationsabhängig gewählt werden, ob die höhere Leistung oder die längere Dauer sinnvoll ist.

Nachfolgend ist das erfindungsgemäße Verfahren anhand eines in der Zeichnung dargestellten Ausführungsbeispiels näher erläutert.

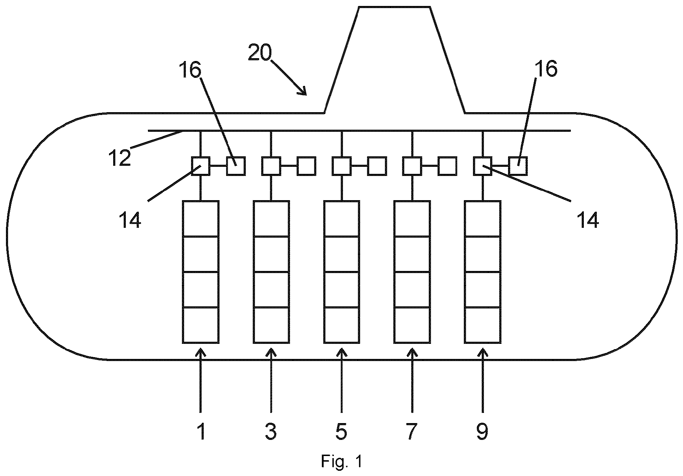

### Fig. 1 beispielhaftes Unterseeboot

In Fig. 1 ist ein beispielhaftes Unterseeboot 20 mit fünf Strängen 1, 3, 5, 7, 9 dargestellt. Angedeutet ist, dass die Stränge 1, 3, 5, 7, 9 jeweils aus 4 Modulen bestehen. Die Stränge 1, 3, 5, 7, 9 sind jeweils über einen Gleichspannungswandler 14 mit dem Bordnetz 12 verbunden. Die Gelichspannungswandler 14 werden über die Strang-Batteriemanagementsysteme 16 geregelt.

Ist beispielsweise der Strang 5 entladen und daher vom Bordnetz 12 getrennt, so stehen nur noch vier Stränge 1, 3, 7, 9 zur Verfügung und somit maximal 80 % der theoretischen Maximalleistung. Steuern nun die Strang-Batteriemanagementsysteme 16 die Gleichspannungswandler 14 so an, dass die verbleibenden Stränge 1, 3, 7, 9 mit einer auf 120 % der Maximallast gesteigerten Maximallast an, so stehen 96 % der Maximalleistung zur Verfügung. Dieses wird beispielsweise auf eine Lasterhöhungszeit von 5 min begrenzt. Diese Leistung kann beispielsweise genutzt werden, um das Auftauchen mit maximaler Antriebsleistung zu unterstützen.

### Bezugszeichen

- 1: Strang
- 3: Strang
- 5: Strang
- 7: Strang
- 9: Strang
- 12: Bordnetz
- 14: Gleichspannungswandler
- 16: Strang-Batteriemanagementsystem
- 20: Unterseeboot

## Patentansprüche

1. Verfahren zum Betreiben eines Unterseebootes (20) mit einer Energiespeichervorrichtung, einem Bordnetz (12) und wenigstens einem Verbraucher, wobei die Energiespeichervorrichtung wenigstens zwei Stränge (1, 3, 5, 7, 9) aufweist, wobei jeder Strang (1, 3, 5, 7, 9) ein Strang-Batteriemanagementsystem (16) aufweist, wobei jeder Strang (1, 3, 5, 7, 9) über einen Gleichspannungswandler (14) trennbar mit dem Bordnetz (12) verbunden ist, wobei das Strang-Batteriemanagementsystem (16) zur Ansteuerung des Gleichspannungswandlers (14) ausgebildet und mit diesem verbunden ist, wobei jeder Strang einen Strang-Ladezustand aufweist, wobei für jeden Strang (1, 3, 5, 7, 9) eine Maximallast vorgegeben wird, **dadurch gekennzeichnet, dass** für jeden Strang (1, 3, 5, 7, 9) eine gesteigerte Maximallast zusammen mit einer Lasterhöhungszeit vorgegeben wird, wobei zur Erreichung der erhöhten Leistungsabgabe das Strang-Batteriemanagementsystem (16) den Gleichspannungswandler (14) zur Abgabe der gesteigerten Maximallast für maximal die Lasterhöhungszeit ansteuert.

2. Verfahren nach Anspruch 1, **dadurch gekennzeichnet, dass** wenigstens ein Strang (1, 3, 5, 7, 9) vom Bordnetz (12) getrennt ist.

3. Verfahren nach einem der vorstehenden Ansprüche, **dadurch gekennzeichnet, dass** das Bordnetz (12) eine Bordnetzmaximallast aufweist, wobei das Produkt aus der Anzahl der mit dem Bordnetz (12) verbundenen Stränge (1, 3, 5, 7, 9) und der gesteigerten Maximallast kleinergleich der Bordnetzmaximallast ist.

4. Verfahren nach einem der vorstehenden Ansprüche, **dadurch gekennzeichnet, dass** die Lasterhöhungszeit so gewählt ist, dass in der Lasterhöhungszeit weitere getrennte Stränge (1, 3, 5, 7, 9) mit dem Bordnetz verbunden werden können.

5. Verfahren nach einem der vorstehenden Ansprüche, **dadurch gekennzeichnet, dass** eine Ruhezeit vorgegeben wird, wobei nach der Steigerung der Leistungsabgabe die Steigerung während der Ruhezeit nicht erneut durchgeführt werden kann.

6. Verfahren nach einem der vorstehenden Ansprüche, **dadurch gekennzeichnet, dass** ein Mindestladezustand vorgegeben wird, wobei der wenigstens eine vom Bordnetz (12) getrennte Strang (1, 3, 5, 7, 9) einen Strang-Ladezustand von höchstens dem Mindestladezustand aufweist.

7. Verfahren nach einem der vorstehenden Ansprüche, **dadurch gekennzeichnet, dass** für jeden Strang (1, 3, 5, 7, 9) eine weitere gesteigerte Maximallast zusammen mit einer weiteren Lasterhöhungszeit vorgegeben wird.
